# EUROPEAN PATENT APPLICATION

(11) **EP 1 046 356 A2**
(43) Date of publication of application: **25.10.2000**
(21) Application number: 00302800.8
(22) Date of filing: 03.04.2000
(51) Int. Cl.: A45D 33/34

(54) **A method of manufacturing flexible pads for the application of cosmetics**

(30) Priority: 13.04.1999 GB 9908293
(71) Applicant: Synlatex Limited, Gloucester GL3 1DL (GB)
(72) Inventor: Duncombe, Peter H., Dorridge, Solihull B93 8DX (GB)
(74) Representative: Carter, Gerald

(57) **Abstract**

Pads for the application of cosmetics are manufactured by applying a pressure-sensitive low-tack adhesive to a thin sheet of protective material (32), and then affixing the sheet, by means of the adhesive, to a sheet of foam material (28), which may be flocked (30) on one side. A number of circular elements (16) are then cut from this composite sheet (26) in a single cutting operation, each element (16) comprising a foam applicator pad (18) to which an individual protective element (22) is attached by the low-tack adhesive. Each element (16) may then be placed in a container (10) of face powder or other cosmetic, with the protective element (22) disposed between the foam pad (18) and the cosmetic (14). The user removes the element from the container, strips the protective element (22) from the foam pad (18), separating the low-tack adhesive, and the pad is then ready for use to apply the cosmetic.

## Description

The invention relates to a method of manufacturing flexible pads for use in the application of cosmetics.

The invention is particularly, but not exclusively, applicable to the manufacture of pads for the application of cosmetic face powder. Such applicators are still commonly referred to as "powder puffs" as a relic of the times when face powder applicators were in the form of a soft downy ball for applying loose face powder to the skin. At the present time, however, it is more usual for a "powder puff" to be in the form of a comparatively flat pad, usually circular or square, of suitable flexible material such as plastics foam. Often the foam will have a layer of flock applied to one or both sides thereof.

Such powder puffs are usually included in a container of face powder or other cosmetic as it is sold to the public. At present, face powders are usually sold as a comparatively solid block of compacted powder, rather than as loose powder. Conveniently, the powder puff is of the same general size and shape as the block of powder and lies on top of the block when in the container. If the powder puff were to be in direct contact with the upper surface of the block of powder, there would be a tendency for powder to transfer to the undersurface of the powder puff during storage and transport with the result that, when the container is first opened by the purchaser, the powder puff may have a "used" look. In order to avoid this, it is common practice to locate a thin disc of protective material between the surface of the powder puff and the surface of the powder.

During assembly of the cosmetic product it is usual for the powder puff and protective disc to be placed in the container of powder by hand. Thus, an operator has a supply of powder puffs and a supply of protective discs which have to be assembled together, in accurate registration, before being placed in the container. Alternatively, the operator may first place a protective disc in the container and then lay a powder puff on top of the protective disc. Both methods are time-consuming and require a significant degree of manual dexterity to carry out rapidly. Also, individual powder puffs and protective discs are manufactured by cutting the shapes from large sheets of the appropriate material. Cutting out of the protective discs is performed as a separate operation from cutting out the powder puffs and, again, this is time-consuming and hence costly.

The present invention provides an improved method of manufacturing powder puffs and similar applicators for cosmetics, which may overcome the disadvantages of the present methods referred to above.

According to the invention there is provided a method of manufacturing flexible pads for the application of cosmetics, the method comprising forming a composite material from a sheet of flexible pad-forming material to at least one surface of which is affixed, by means of a non-permanent adhesive, a sheet of protective material, and then cutting from the composite material a plurality of similarly shaped composite elements, whereby each such element comprises a cosmetic applicator pad to which is detachably affixed, by the non-permanent adhesive, an individual correspondingly shaped protective element.

Thus, this method provides two advantages. Firstly, the applicator pads and their associated protective elements are cut out together in a single operation instead of in separate operations as has previously been the case. Secondly, the operator then has only a single composite element to place in the container of face powder or other cosmetic, the single composite element being placed in the container with the protective element in contact with the powder or other cosmetic. When the purchaser wishes to use the applicator pad, they simply strip the protective element from the pad, separating the non-permanent adhesive, and the clean pad is then ready for use. The adhesive is preferably of the type which is commonly referred to as a "low-tack" adhesive. That is to say, the holding power of the adhesive is very low and is preferably the minimum necessary to maintain the protective element attached to the applicator pad during handling in the periods between cutting out of the composite elements and putting them in the individual containers.

Preferably the non-permanent adhesive is pre-applied to that surface of the sheet of protective material which is applied to the surface of the sheet of pad-forming material. For example, the adhesive may be a pressure sensitive adhesive.

The method may include the step of applying pressure to the composite material, for example by passing it through compression rollers, prior to cutting the plurality of individual shaped elements from it, or by the design of the tool which, during the cutting operation, applies compressive forces to the composite material.

The pad-forming material may be of any suitable type for use as a cosmetics applicator. For example, as previously mentioned, it may comprise a layer of foam to at least one surface of which is applied a layer of flock. Nitrile butadiene rubber (NBR) could be used. The sheet of protective material may be applied to the side of the pad-forming material bearing the flock or to the side opposite the flock. Thus, in the case where flock is applied to only one side of a layer of foam, the protective material may be applied to the foam layer.

The composite material may be cut using either unheated cutters or heated cutters. In the latter case the cutter design and specified temperature of the cutters may be sufficient to seal the side edges of the pad-forming material as each shaped element is cut from the composite material.

Preferably, the individual shaped elements of composite material are stacked after cutting in a manner to maintain pressure between each protective element and its associated applicator pad.

The individual shaped elements cut from the composite material may be circular, square, or any other required shape.

The invention includes within its scope a composite element comprising a flexible pad for the application of cosmetics and a protective sheet element overlying a surface of the applicator pad and of corresponding shape thereto, the protective sheet element being attached to the surface of the applicator pad by a non-permanent adhesive, such that the protective element may be peeled from the applicator pad without significant damage to the surface thereof.

The following is a more detailed description of the invention, reference being made to the accompanying drawings in which:
Figure 1 is a diagrammatic section through a container of cosmetic face powder,
Figure 2 is a diagrammatic section showing the cutting of powder puffs from a sheet of composite material according to the invention, and
Figure 3 is a section similar to that of Figure 2 showing an alternative method according to the invention.

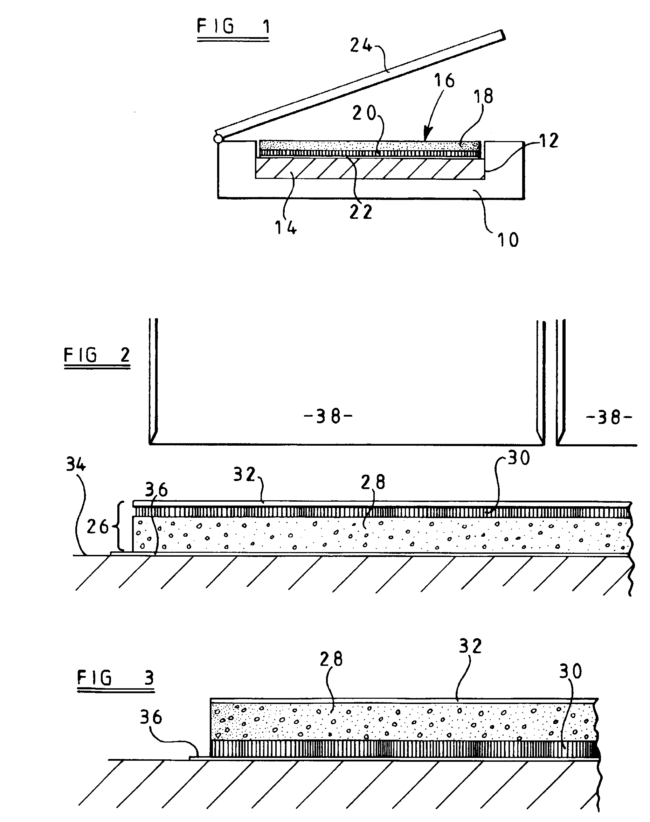

Referring to Figure 1, a container for face powder comprises a base 10 moulded from suitable plastics material and formed with a circular recess 12. Received in the recess 12 is a circular tablet 14 of compacted face powder.

In the recess 12, above the tablet of powder 14, is a circular applicator pad or powder puff 16 comprising a layer 18 of foamed plastics to the underside of which is applied a layer of flock 20. A thin flexible circular protective disc 22 is located between the applicator pad 16 and the powder 14 so as to prevent transfer of the powder to the underside of the applicator pad. The container is provided with a hinged lid 24.

In the prior art methods of assembling such a product, the protective disc 22 is preformed separately from the applicator pad 16 so that they must be placed in the recess 12 separately, or must be placed and held together in registration by the operator before being placed in the recess together. According to the present invention, however, the protective disc 22 is already attached to the undersurface of the pad 16 by a removable semi-permanent adhesive to form a composite element which may be inserted in the recess 12 in one piece. Figure 2 shows diagrammatically, on an enlarged scale, a method of manufacturing such composite elements according to the present invention.

Referring to Figure 2: a large composite sheet of material 26 is first formed, or a number of sheets which are sealed together at the periphery when die cut. The lower part of the sheet comprises a layer of polyurethane/polyester foam 28 to the upper surface of which is applied a layer of closely packed flock fibres 30 secured to the foam 28 by an adhesive layer. The method of manufacturing such flocked foam is well known and will not be described in detail. The layer of foam 28 may have a thickness of 4.3mm, but any other suitable thickness of foam may be employed. The polyurethane/polyester foam may have the following characteristics:

| | |
|---|---|
| Density (Kg/m³): | 24.0 - 27.0 |
| Tensile Strength (kPa): | 160 - 500 |
| Elongation at Break (%) | 250 - 600 |
| 50% Compression Set (%): | 0 - 10.0 |
| Cell Count (per cm): | 18 - 26 |
| 40% CLD Hardness (kPa): | 2.5 - 4.5 |

The flock may comprise fibres of cotton, rayon, nylon, acrylic or any other appropriate fibre, such as woven or knitted material, although rayon/viscose fibre is preferred. The adhesive layer attaching the flock fibres to the foam layer 28 may be a modified co-polymer. The length of the flock fibres may be about 0.5mm, although other lengths of fibre may be employed if desired, for example in the range of 0.2-2.00mm. The flock may be of any suitable colour. In the present instance the flock 30 is applied to one surface only of the foam 28, but it may be applied to both surfaces if required.

The other element of the composite sheet material 26 comprises a thin flexible sheet material 32 to the underside of which is pre-applied a pressure sensitive low-tack adhesive, such as high technical acrylic adhesive. The sheet 32 may be about 0.05mm in thickness. It may be formed from any suitable material which is impermeable to the cosmetic with which the final product is to be used. The sheet 32 may, for example, be formed from polyethylene film. The sheet 32 may be plain or, if desired, may be printed on its upper surface, for example with a logo and/or message or instructions.

The adhesive-coated sheet 32 is attached to the flocked foam layer, for example by passing the combined sheets through low compression rollers so that the low-tack adhesive on the underside of the sheet 32 adheres lightly to the flock on the upper side of the foam layer 28. The composite sheet material 26 is then ready for cutting into individual shaped elements.

For the cutting operation, the composite material 26 is placed on a flat cutting bed 34 with the protective sheet material 32 uppermost, as shown, or with the sheet material lowermost. A sheet of paper 36 is placed between the underside of the composite material 26 and the bed 34. The individual shaped elements are then cut from the sheet using an array of suitably shaped cutters, indicated diagrammatically at 38, which are pressed downwardly through the composite sheet 26. The cutters 38 may be of any required shape, although usually they will be circular, oval or square. In the arrangement of Figure 2, the cutters are at ambient temperature and therefore cut the composite materials mechanically.

Each individual shaped element cut from the composite material 26 comprises a flocked foam applicator pad to which is attached, by the low tack adhesive, a correspondingly shaped protective element. The individual shaped elements are stacked under light pressure, until required, in order to maintain the protective elements 22 pressed against the flocked foamed layer. The stacked elements may be stored for a period before further use in order to ensure adequate adhesion of the protective elements 22 to the foam pads. The composite elements may then be added to containers of cosmetic, for example as shown in Figure 1, with the protective element 22 protecting the applicator pad from contamination by the cosmetic.

In the arrangements of Figures 1 and 2 the protective elements are applied to the flocked side of the applicator pad. However, this is not essential, and Figure 3 shows diagrammatically an arrangement where the protective sheet 32 is applied to the side of the foam layer 28 which is opposite the flock layer 30. In this case the protective sheet 32 may again be either uppermost or lowermost during the cutting operation, which, again, may be a cold cutting operation at ambient or slightly elevated temperature.

In some cases, it may be desirable for the composite sheet material to be cut into individual shaped elements by a hot cutting process in which the shaped cutters 38 are heated. Depending on the materials used this may facilitate the cutting process and may also have the advantage of heat-sealing the peripheral edges of the foam layer 28 of each individual element, which may be desirable with some types of plastics foam. Where a hot cutting process is performed the protective sheet 32 of the composite material may again be uppermost or may be lowermost, adjacent the paper sheet 36, so that the heated cutters cut the foam layer 28 before they cut the protective sheet 32. Again, when using a hot cutting process, the protective sheet 32 can be pre-attached to either the flocked side or the unflocked side of the foam layer 28. Also, as previously mentioned, the foam layer 28 could be flocked on both sides.

The dimensions and materials of the various components of the composite layer 26, as described above, are given by way of example, and it will be appreciated that any other suitable materials or dimensions may be employed. Although the invention is particularly applicable to the manufacture of so-called powder puffs for the application of face powder, it will be appreciated that the invention is also applicable to applicator pads for any other cosmetic purpose where it is desired to provide a protective element between the pad and the cosmetic, or where it is desired merely to provide a protective element across the surface of the applicator pad for general hygiene purposes.

## Claims

1. A method of manufacturing flexible pads for the application of cosmetics, characterised by the steps of: forming a composite material (26) from a sheet of flexible pad-forming material (28) to at least one surface of which is affixed, by means of a non-permanent adhesive, a sheet of protective material (32), and then cutting from the composite material a plurality of similarly shaped composite elements (16), whereby each such element (16) comprises a cosmetic applicator pad (18) to which is detachably affixed, by the non-permanent adhesive, an individual correspondingly shaped protective element (22).

2. A method according to Claim 1, wherein the non-permanent adhesive is pre-applied to that surface of the sheet of protective material (32) which is then applied to the surface of the sheet of pad-forming material (28).

3. A method according to Claim 1 or Claim 2, wherein the adhesive is a pressure-sensitive adhesive.

4. A method according to any of the preceding claims, including the further step of applying pressure to the composite material (26), prior to cutting the plurality of individual shaped elements (16) from it.

5. A method according to Claim 4, wherein pressure is applied to the composite material (26) by passing it through compression rollers,

6. A method according to any of the preceding claims, wherein the pad-forming material comprises a layer of foam (28) to at least one surface of which is applied a layer of flock (30).

7. A method according to Claim 6, wherein the sheet of protective material (32) is applied to the side of the pad-forming material (28) bearing the flock (30).

8. A method according to Claim 6, wherein the sheet of protective material (32) is applied to the side of the pad-forming material (28) opposite the side bearing the flock (30).

9. A method according to any of the preceding claims, wherein the composite material (26) is cut using heated cutters (38).

10. A method according to Claim 9, wherein the heated cutters (38) are heated to a temperature sufficient to seal the side edges of the pad-forming material (28) as each shaped element is cut from the composite material.

11. A method according to any of the preceding claims, including the further step of stacking the individual shaped elements (16) of composite material after cutting, in a manner to maintain pressure between each protective element (22) and its associated applicator pad (18).

12. A method according to any of the preceding claims, wherein the individual shaped elements (16) cut from the composite material are circular.

13. A method according to any of the preceding Claims 1 to 11, wherein the individual shaped elements (16) cut from the composite material are square.

14. A composite element comprising a flexible pad (18) for the application of cosmetics and a protective sheet element (22) overlying a surface of the applicator pad and of corresponding shape thereto, the protective sheet element being attached to the surface of the applicator pad by a non-permanent adhesive, such that the protective element may be peeled from the applicator pad without significant damage to the surface thereof.

15. A composite element according to Claim 14, wherein the non-permanent adhesive is pre-applied to that surface of the protective sheet element (22) which is in contact with the surface of the applicator pad (18).

16. A composite element according to Claim 14 or Claim 15, wherein the adhesive is a pressure sensitive adhesive.

17. A composite element according to any of Claims 14 to 16, wherein the applicator pad (18) comprises a layer of foam to at least one surface of which is applied a layer of flock (20).

18. A composite element according to Claim 17, wherein the protective sheet element (22) is applied to the side of the applicator pad (18) bearing the flock (20).

19. A composite element according to Claim 17, wherein the protective sheet element (22) is applied to the side of the pad-forming material (18) opposite the side bearing the flock (20).

20. A composite element according to any of Claims 14 to 19, wherein the side edges of the applicator pad (18) are heat sealed.

21. A composite element according to any of Claims 14 to 20, wherein the applicator pad (18) and protective sheet element (22) are circular.

22. A composite element according to any of Claims 14 to 20, wherein the applicator pad (18) and protective sheet element (22) are square.
